# EUROPEAN PATENT APPLICATION

(11) **EP 4 607 400 A1**
(43) Date of publication of application: **27.08.2025**
(21) Application number: 24195269.6
(22) Date of filing: 20.08.2024
(51) Int. Cl.: G06F 30/39, G06F 30/394, G06F 111/04, H01L 25/065

(54) **THREE-DIMENSIONAL INTEGRATED CIRCUIT (3DIC) AND 3DIC DESIGN METHOD AND SYSTEM**

(30) Priority: 26.02.2024 US 202418586666
(71) Applicant: GlobalFoundries U.S. Inc., Malta, NY 12020 (US)
(72) Inventor: Narisetty, Haritez, Santa Clara 95054 (US); Letavic, Theodore James, Malta 12020 (US)
(74) Representative: Grünecker Patent- und Rechtsanwälte PartG mbB

(57) **Abstract**

A three-dimensional integrated circuit (3DIC) design method and system includes metal stack and bonding pitch optimization to improve power, performance, and area (PPA). The resulting 3DIC includes a first chip and a second chip. A last metal level of the second chip can be bonded to the last metal level of the first chip by bonding elements. The bonding pitch of the bonding elements can be at least as large as the pitches of the first chip last metal level and the second chip last metal level. The metal stack configurations of each chip may be the same or different. With different metal stack configurations, the total numbers of metal levels on each chip, the thicknesses of the metal levels on each chip and/or the pitches of the last metal levels on each chip may be different.

## Description

### BACKGROUND

The present disclosure relates to three-dimensional integrated circuits (3DICs) and, more particularly, to embodiments of a 3DIC and to embodiments of a method and a system for designing the 3DIC.

Factors considered in modern IC design include, but are not limited to, power, performance, and area (PPA) as well as manufacturing costs. Unfortunately, addressing one of these factors may result in degradation in one or more of the other factors. For example, 3DICs have been developed that include a pair of chips (also referred to herein as dies or two-dimensional integrated circuits (2DICs)). In such 3DICs, a top surface of the last back end of the (BEOL) metal level (also referred to herein as the last or top metal level) of one chip may be bonded to the top surface of the last metal level of another chip. By incorporating two stacked chips, a 3DIC can reduce the footprint (i.e., area) by 50%. Unfortunately, this footprint reduction alone does not make production of these 3DICs practical because manufacturing a 3DIC is significantly more expensive than manufacturing two 2DICs individually, and any improvement in power and/or performance is limited.

### SUMMARY

Disclosed herein are embodiments of a structure and, particularly, a 3DIC structure. The structure can include a first chip and a second chip. The first chip can have first chip metal levels. The first chip metal levels can include at least a first chip last metal level with a first chip last metal level pitch. The second chip metal levels can include at least a second chip last metal level with a second chip last metal level pitch. The structure can further include bonding elements, which connect the first chip last metal level and the second chip last metal level and which have a bonding pitch that is at least as large as the first chip last metal level pitch and at least as large as the second chip last metal level pitch.

Also disclosed herein are embodiments of a method for designing a 3DIC, as described above. In some embodiment, the method can include accessing, by a processor from a memory, a preliminary design for the 3DIC. This preliminary design can include partial designs for a first chip and a second chip to be included in the 3DIC and the partial designs can specifically be devoid of any metal levels (i.e., only design up through the middle of the line (MOL) features). The method can further include determining, by the processor based on the preliminary design of the 3DIC (including the partial designs of the two chips): a first chip metal stack configuration; a second chip metal stack configuration; and a bonding pitch. The first chip metal stack configuration can be for first chip metal levels of the first chip and can define a first chip last metal level pitch (i.e., the pitch for the last metal level of the first chip metal levels). The second chip metal stack configuration can be for second chip metal levels of the second chip and can define a second chip last metal level pitch (i.e., the pitch for the last metal level of the second chip metal levels). The bonding pitch can be for bonding elements that will connect the first and second chip and this bonding pitch can specifically be at least as large as the first chip last metal level pitch and the second chip last metal level pitch. The method can further include determining, by the processor, routing for the 3DIC. This routing can be determined based on the partial designs for the first chip and the second chip, the first chip metal stack configuration, the second chip metal stack configuration, and the bonding pitch. The method can further include generating, by the processor, an updated design for the 3DIC. This updated design can include the first chip, the second chip, the first chip metal stack configuration, the second chip metal stack configuration, the bonding pitch, and the routing.

In other embodiments, the method can include receiving, by a processor from a user through a graphic user interface (GUI), two selections from a menu. The selections can be made based on a preliminary design for a 3DIC. The preliminary design for the 3DIC can include partial designs for a first chip and a second chip and the partial designs can specifically be devoid of any metal levels. The menu can include selectable options, where each option specifies a metal stack configuration, a last metal level pitch, and a bonding pitch that is at least as large as the last metal level pitch. The two selections received by the processor can include: an initial selection from the menu; and a subsequent selection from only those selectable options on the menu that have the same bonding pitch as the initial selection. In any case, the two selections can indicate: for the first chip, a first chip metal stack configuration for first chip metal levels, wherein the first chip metal stack configuration defines a first chip last metal level pitch; for the second chip, a second chip metal stack configuration for second chip metal levels, wherein the second chip metal stack configuration defines a second chip last metal level pitch; and the bonding pitch for bonding elements that will connect the first chip and the second chip in the 3DIC. The method can further include determining, by the processor, routing for the 3DIC. Such routing can be determined based on the partial designs for the first chip and the second chip and further based on the two selections. The method can further include generating, by the processor, an updated design for the 3DIC. The updated design can include the first chip, the second chip, the first chip metal stack configuration, the second chip metal stack configuration, the bonding pitch, and the routing.

### BRIEF DESCRIPTION OF THE DRAWINGS

The present disclosure will be better understood from the following detailed description with reference to the drawings, which are not necessarily drawn to scale and in which:
FIG. 1 is a schematic diagram illustrating a disclosed embodiment of a 3DIC design system;
FIGs. 2 and 3 are flow diagrams illustrating disclosed embodiments of a 3DIC design method.
FIGs. 4.1 and 4.2 are cross-section diagrams illustrating partial designs of first and second chips, respectively, that are included in a preliminary design of a 3DIC;
FIGs. 5A-5B are drawings illustrative of screenshots of a graphic user interface (GUI) menu of selectable options;
FIGs. 6A-6E are cross-section diagrams illustrating disclosed embodiments of 3DICs, respectively; and
FIG. 7 is a schematic diagram illustrating a hardware environment that can be employed to implement the disclosed design method and system embodiments.

### DETAILED DESCRIPTION

As mentioned above, 3DICs have been developed that include a pair of chips (also referred to herein as dies or two-dimensional integrated circuits (2DICs)). In such 3DICs, a top surface of the last metal level of one chip may be bonded to the top surface of the last metal level of another chip. By incorporating two stacked chips, a 3DIC can reduce the footprint (i.e., area) by 50%. Unfortunately, this footprint reduction alone does not make production of these 3DICs practical because manufacturing a 3DIC is significantly more expensive than manufacturing two 2DICs individually, and any improvement in power and/or performance is limited. More specifically, with 3DIC manufacturing there are added costs associated with processing and materials required for wafer bonding (e.g., bump-type bonding or hybrid bonding) as well as for the formation of through substrate vias (TSVs) required for 3DIC operation). Furthermore, even with reduced bonding pitches achievable with state-of-the-art bonding technologies, improvement in power and performance and any additional improvement in area is limited by the last metal level pitch (which is relatively large given the high number of metal levels typically employed on 2DICs).

In view of the foregoing, disclosed herein are embodiments of a 3DIC design method and system, which includes metal stack and bonding pitch optimization to improve power, performance, and area (PPA). Specifically, in the disclosed 3DIC design method and system, metal stack configurations for first and second chips (e.g., bottom and top chips) of a 3DIC and the bonding pitch for bonding elements that connected the first and second chips are either customized or selected from a menu. The metal stack configuration for each chip can define, for example, the total number of metal levels and the thickness and pitch of metal features at each metal level. Customization or selection of the metal stack configurations and the bonding pitch can be made based on a preliminary design for the 3DIC. This preliminary design can include partial designs for the first and second chips (which were previously developed with design processing continuing only through middle of the line (MOL) features such that the partial designs are devoid of back end of the line (BEOL) metal levels). Customization or selection of the metal stack configurations and the bonding pitch can further be performed so that the bonding pitch is at least as large as the pitches specified in the metal stack configurations for the last metal levels on each chip. Routing for the 3DIC can be determined based on the partial designs for the chips, the metal stack configurations for the chips, and the bonding pitch. Routing for the 3DIC can further be determined considering PPA. That is, a PPA analysis can also be performed and, if any specifications related to PPA are not met, the above-described design processes can be iteratively repeated until the PPA specifications are met. Then, a final design for the 3DIC can be generated and released to manufacturing. Also disclosed herein are embodiments of a 3DIC, which has, for example, been manufactured according to a final design generated using the disclosed 3DIC design method and system. The 3DIC can have first and second chips, which are bonded by bonding elements that have a bonding pitch at least as large as the pitches of the last metal levels on each chip. The metal stack configurations of each chip may be the same or different. With different metal stack configurations, the total numbers of metal levels on each chip, the thicknesses of the metal levels on each chip and/or the pitches of the last metal levels on each chip may be different.

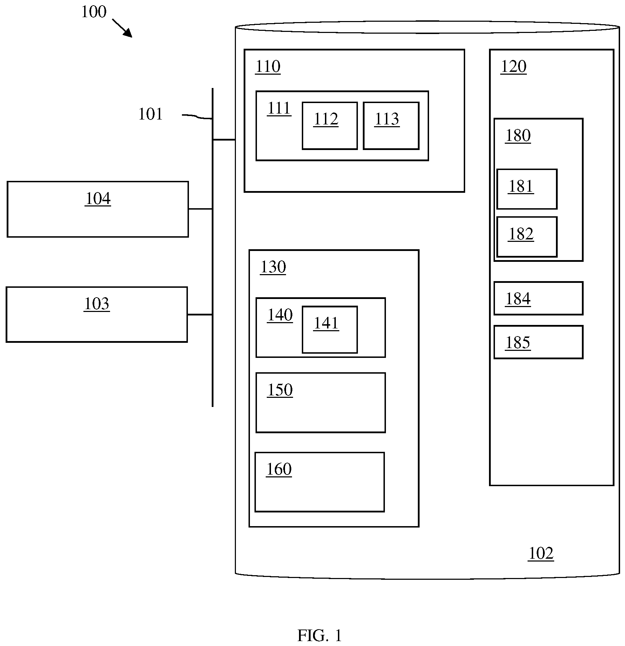

More particularly, FIG. 1 is a schematic diagram illustrating disclosed embodiments of a computer-aided design (CAD) system 100. CAD system 100 can include multiple system components. These CAD system components can include, but are not limited to, one or more processors 103, one or more display monitors 104, and one or more computer readable storage mediums 102. The system components can be interconnected over a system bus 101 (as illustrated) and/or over a wired or wireless network. For purposes of illustration, CAD system 100 is described below and illustrated in FIG. 1 as having a single processor, a single display monitor, and a single storage medium. However, it should be understood that FIG. 1 is not intended to be limiting. Alternatively, CAD system 100 could incorporate multiple processors for performing one or more of the different processes in a design flow, multiple display monitors, and/or multiple storage mediums, which are accessible by the processor(s) and which store the required data, software tools, etc. for performing different processes in the disclosed computer-aided design method. Furthermore, all system components can be co-located. Alternatively, the various system components can be incorporated into a distributed system whose components are located on different networked computers.

Storage medium 102 can store electronic design automation (EDA) tool(s) 130 (e.g., specialized software program(s)). Each EDA tool 130 can include program instructions that are executable by processor 103 to cause processor 103 to perform process steps in the disclosed computer-aided design method. EDA tools 130 can include at least the following tools for implementation of the disclosed computer-aided design method: a design layout tool 140 or the like (which is uniquely configured to facilitate the performance of routing of the devices, circuits, standard cells, design building blocks/hierarchies, etc. while optimally using the resources provided by metal stack and bonding pitch, as discussed in detail below); and power, performance, and area (PPA) analysis tool(s) 150. EDA tools 130 can further include other conventional EDA tool(s) 160 employed in the design of 3DICs.

Storage medium 102 can further store design information, which is accessible and usable by one or more EDA tools 130 during performance of the 3DIC design flow. Design information can be for a specific technology node (also referred to herein as a specific processing technology). Optionally, the design information can be in the form of a process design kit (PDK) 110. A PDK 110 is a set of electronic files including both data and script files. A PDK is typically developed by a semiconductor foundry for its customers in order to facilitate design of ICs at a specific technology node supported by the foundry. The electronic files within the PDK are accessible by one or more EDA tools executed on a CAD system at different stages in the design flow. Examples of PDK electronic files include, but are not limited to, simulation models, symbols and technology files 111, a cell library 112, and design rule decks 113. PDKs are well known in the art and, thus, the details thereof have been omitted from the specification except for any additional PDK features disclosed herein and discussed in greater detail below. Storage medium 102 can further store various design files 120, as discussed in greater detail below, generated during the design flow.

In conventional 3DIC design, first and second chips (i.e., bottom and top chips) of a 3DIC are designed independently. Each chip has a given metal stack configuration. The metal stack configuration indicates the total number of back end of the line (BEOL) metal levels and, for each metal level, the thickness and pitch of metal features contained therein. The metal stack configurations for the first and second chips can be the same or different and can, for example, be pre-defined in a PDK. The pitch of bonding elements (also referred to herein as the bonding pitch) that will electrically connect and bond together the last metal levels of the first and second chips can also be pre-defined in the PDK. This bonding pitch is typically independent of and smaller than the pitches defined in the metal stack configurations for the last metal levels.

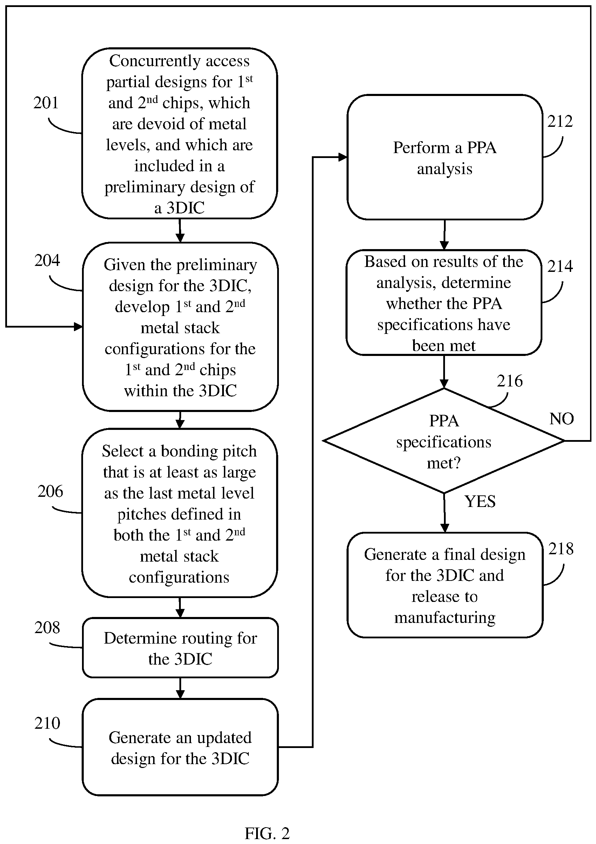

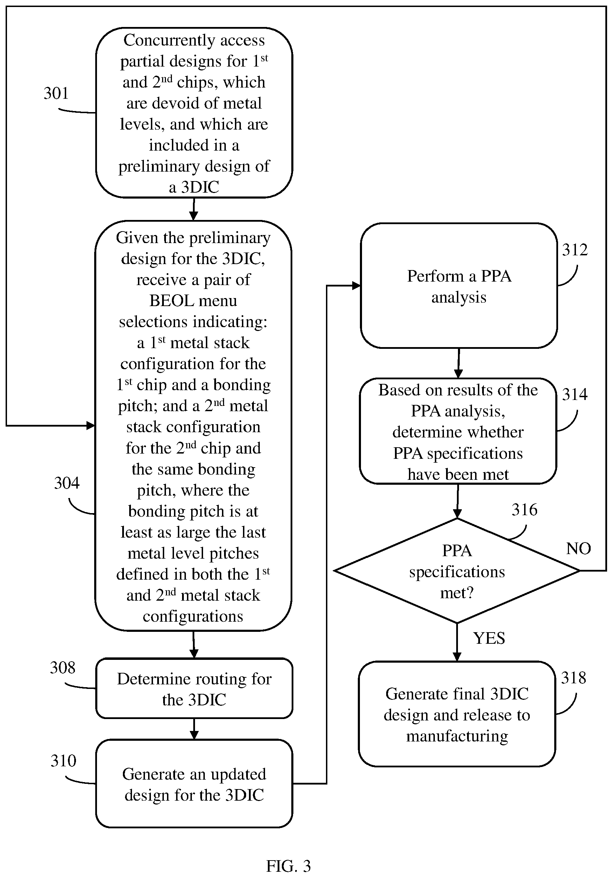

Contrarily, in the 3DIC design method disclosed herein, PPA of the 3DIC can be improved because BEOL metal levels for first and second chips are designed concurrently and because the bonding pitch is dependent on the last metal level pitches of both the first and second chips. More particularly, FIGs. 2 and 3 are flow diagrams illustrating disclosed embodiments of a 3DIC design method, which can be implemented, for example, using CAD system 100 of FIG. 1. The 3DIC design method embodiments disclosed herein can begin with accessing a preliminary design 180 for a 3DIC (see process 201 of FIG. 2, and process 301 of FIG. 3). Preliminary design 180 can, for example, be stored in design files 120 in storage medium 102.

Preliminary design 180 can include partial designs 181-182 for a first chip and a second chip for the 3DIC. Partial designs 181-182 can be previously developed, for example, on CAD system 100 based on design specifications for the 3DIC and using various EDA tools 130 and PDK 110 with design processing continuing only through middle of the line (MOL) features (e.g., MOL contacts, interlayer dielectric (ILD) material, etc.) such that partial designs 181-182 are devoid of back end of the line (BEOL) features (e.g., BEOL wires and/or vias in BEOL metal levels and bonding elements between the chips).

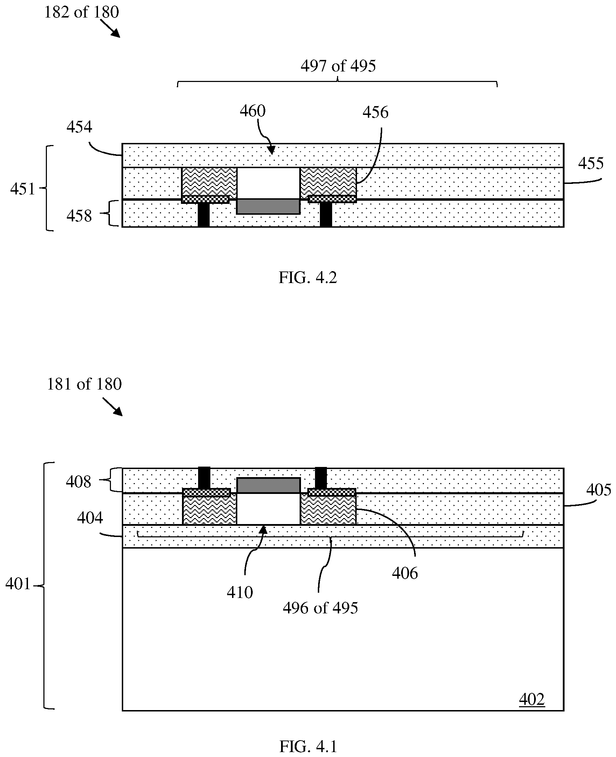

FIGs. 4.1 and 4.2 are cross-section diagrams illustrating examples of partial designs 181 and 182 for first chip 401 and second chip 451, respectively. Since, in the manufactured product, second chip 451 will be flipped relative to first chip 401, it is shown as flipped in FIG. 4.2. For purposes of illustration, the chip structures shown in FIGs. 4.1 and 4.2 are semiconductor-on-insulator structures. However, it should be understood that FIGs. 4.1 and 4.2 are not intended to be limiting. Alternatively, any other type of chip structure suitable for inclusion in a 3DIC could be employed including, but not limited to, bulk semiconductor chip structures (e.g., bulk silicon chip structures).

In the partial design example shown in FIG. 4.1, first chip 401 can include a first chip substrate 402. First chip substrate 402 can be a semiconductor substrate, such as a silicon substrate or a substrate of any other suitable semiconductor material. First chip 401 can further include a first chip insulator layer 404 on first chip substrate 402. First chip insulator layer 404 can be, for example, an oxide layer (also referred to herein as a buried oxide layer), such as a silicon dioxide layer. Alternatively, first chip insulator layer 404 could include a layer of any other suitable insulator material. Partial design 181 of first chip 401 can further include a first chip semiconductor layer 406 (e.g., a monocrystalline semiconductor layer, such as a monocrystalline silicon layer or some other suitable monocrystalline semiconductor layer) on first chip insulator layer 404.

First chip 401 can further include first chip front end of the line (FEOL) devices. Active device regions of first chip FEOL devices can be within first chip semiconductor layer 406. These active device regions can, for example, be defined by first chip shallow trench isolation (STI) regions 405 that extend vertically through first chip semiconductor layer 406 to, into, or through first chip insulator layer 404. For purposes of illustration, only a single first chip FEOL device (e.g., a first chip transistor 410) is shown on first chip 401. It should be understood that first chip 401 can include multiple first chip FEOL devices of the same or different types. Such first chip FEOL devices can be, for example, incorporated into other devices, circuits, logic blocks, etc., which are either found entirely on the first chip or which are split into portions on the first chip and the second chip. For example, first chip transistor 410 could be included in one portion 496 of a component 495 (e.g., a device, circuit, logic block, etc.) on first chip 401 and another portion 497 of the same component 495 can be on a second chip 451, as discussed below.

First chip 401 can further include a first chip MOL region 408. First chip MOL region 408 can include one or more first chip MOL dielectric layers over the first chip FEOL device(s) and one or more first chip MOL contacts extending through first chip MOL dielectric layer(s) (e.g., to first chip FEOL device(s)).

In the partial design example shown in FIG. 4.2, second chip 451 can include a second chip substrate (not shown) (e.g., a semiconductor substrate, such as a silicon substrate) of the same or different thickness than the first chip substrate 402. Alternatively, second chip 451 can be devoid of such a semiconductor substrate (as semiconductor substrates are often removed from the second chip during 3DIC processing). Second chip 451 can include a second chip insulator layer 454. Second chip insulator layer 454 can be, for example, an oxide layer (also referred to herein as a buried oxide layer), such as a silicon dioxide layer. Alternatively, second chip insulator layer 454 could include a layer of any other suitable insulator material. Second chip 451 can further include a second chip semiconductor layer 456 (e.g., a monocrystalline semiconductor layer, such as a monocrystalline silicon layer or some other suitable monocrystalline semiconductor layer) on second chip insulator layer 454.

Second chip 451 can further include second chip FEOL devices. Active device regions of second chip FEOL devices can be within second chip semiconductor layer 456. These active device regions can be defined, for example, by second chip STI regions 455 that extend through second chip semiconductor layer 456 to, into, or through second chip insulator layer 454. For purposes of illustration, only a single second chip FEOL device (e.g., a second chip transistor 460) is shown on second chip 451. It should be understood that second chip 451 can include multiple second chip FEOL devices of the same or different types. Such second chip FEOL devices can be, for example, incorporated into other devices, circuits, logic blocks, etc., which are either found entirely on the second chip 451 or which are split into portions on the first chip and the second chip. For example, second chip transistor 460 could be included in a portion 497 of a component 495 (e.g., a device, circuit, logic block, etc.) on second chip 451 and, as discussed above, another portion 496 of the same component 495 can be on first chip 401.

Second chip 451 can further include: a second chip MOL region 458 including one or more second chip MOL dielectric layers over the second chip FEOL device(s) and one or more second chip MOL contacts extending through the second chip MOL dielectric layer(s) (e.g., to second chip FEOL device(s)).

Referring again to the flow diagrams of FIGs. 2 and 3, at process 201, 301 preliminary design 180 can be accessed. Such access can be made, for example, by processor 103 in response to user inputs (e.g., via a graphic user interface (GUI) on a display monitor 104 or via any other input device). It should be understood that, by accessing preliminary design 180, partial designs 181-182 of the first and second chips are concurrently accessed.

Subsequent design of BEOL components in the 3DIC can be based on preliminary design 180 for the 3DIC including partial designs 181-182 (e.g., of first chip 401 and second chip 451) in combination. The BEOL components in the 3DIC can include, but are not limited to, BEOL metal levels for each chip and bonding elements between the chips. More particularly, the BEOL components in the 3DIC can include: a first chip metal stack configuration for first chip metal levels on the first chip; a second chip metal stack configuration for second chip metal levels on the second chip; the bonding pitch for bonding elements that will connect the first chip and the second chip; and routing of vias and/or wires through the first chip metal levels and second chip metal levels to electrically interconnect the devices, circuits, logic blocks, etc. on the first chip, between devices, circuits, logic blocks, etc. on the second chip, and between devices, circuits, logic blocks, etc. or portions thereof on the first chip and the second chip. For purposes of this disclosure, bonding pitch refers to the linear distance between center lines through adjacent bonding elements used to bond a first chip to a second chip.

In some embodiments, these BEOL components can be custom-designed. For example, referring to the flow diagram of FIG. 2 in combination with partial designs 181-182 (e.g., of first and second chips 401 and 451 of FIGs. 4.1-4.2), at process 204, an analysis of partial designs 181-182 (including an analysis of the required electrical connections on each chip and between the chips) can be performed. Based on results of the analysis, metal stack configurations for the first chip 401 and the second chip 451 can be developed.

The first chip metal stack configuration (i.e., the metal stack configuration for the first chip 401) can indicate, for example: a total number (y) of first chip metal levels (i.e., the total number of metal levels on first chip 401) from a first chip first metal level (M1) to a first chip last metal level (My) and, for each first chip metal level M1-My, a corresponding metal level thickness and a corresponding metal level pitch. For purposes of this disclosure, metal level thickness refers to the maximum height of metal features (e.g., vias and/or wires) within a given metal level and metal level pitch refers to the linear distance between center lines through adjacent metal features within a given metal level. In the first chip metal stack configuration, the metal level thicknesses and the metal level pitches of adjacent metal levels can be either the same or different, but generally metal level thicknesses and metal level pitches will increase across the first chip metal levels between the first chip first metal level (M1) and the first chip last metal level (My).

Similarly, the second chip metal stack configuration (i.e., the metal stack configuration for the second chip 451) can indicate, for example: a total number (z) of second chip metal levels (i.e., the total number of metal levels on second chip 451) from a second chip first metal level (M1) to a second chip last metal level (Mz) and, for each second chip metal level M1-Mz, a corresponding metal level thickness and a corresponding metal level pitch. In this second chip metal stack configuration, the metal level thicknesses and the metal level pitches of adjacent metal levels can be either the same or different, but generally the metal level thicknesses and metal level pitches will increase across the second chip metal levels between the second chip first metal level (M1) and the second chip last metal level (Mz).

Once the first chip metal stack configuration and the second chip metal stack configuration have been developed, the bonding pitch for bonding elements that will connect first chip last metal level (My) and second chip last metal level (Mz) can be selected (see process 206). The bonding pitch can specifically be selected so that it is at least as large or larger than the first chip last metal level pitch (i.e., the pitch of the metal features in the first chip last metal level (My)) as defined by the first chip metal stack configuration and at least as large or larger than the second chip last metal level pitch (i.e., the pitch of the metal features in the second chip last metal level (Mz)) as defined by the second chip metal stack configuration. By making the bonding pitch at least as large as the first chip last metal level pitch and the second chip last metal level pitch, the design method ensures a PPA advantage by avoiding a bottleneck of current flow from one chip to the other. Additionally, the first chip last metal level (My) and the second chip last metal level (Mz) do not become a bottleneck for available routing resources when determining where to place and connect components or portions thereof on different chips (e.g., when determining where to place and connect second portion 497 of component 495 on second chip 451 relative to first portion 496 of component 495 on first chip 401).

At processes 204-206, the first chip metal stack configuration and the second chip metal stack configuration can be developed and the bonding pitch can be selected to ensure that the 3DIC will have a minimum total number of metal levels (which is equal to the sum of the total number (y) of first chip metal levels (M1-My) defined in the first chip metal stack configuration and the total number (z) of second chip metal levels (M1-Mz) defined in the second chip metal stack configuration) with a suitable arrangement of thicknesses and pitches to make all necessary electrical connections between components on first chip 401, between components on second chip 451, and between components of the two chips 401 and 451. The first chip metal stack configuration and the second chip metal stack configuration could be the same (i.e., could each have the same total number of metal levels with the same arrangement of thicknesses and pitches). Alternatively, the first chip metal stack configuration and the second chip metal stack configuration could be different. For example, the total number (y) of first chip metal levels (M1-My) can be different from the total number (z) of second chip metal levels (M1-Mz) and, thus, the arrangement of metal level thicknesses and metal level pitches in the metal stacks on the two chips would also be different. Alternatively, the total number (y) of first chip metal levels (M1-My) and the total number (z) of second chip metal levels (M1-Mz) could be the same but the arrangement of metal level thicknesses and metal level pitches in the metal stacks could be different.

In other embodiments, the BEOL components can be designed with computer assistance through the use of menu selections. For example, referring to the flow diagram of FIG. 3 in combination with partial designs 181-182 (e.g., of first and second chips 401 and 451 of FIGs. 4.1-4.2), at process 304, subsequent design of the BEOL components for the 3DIC including the first metal stack configuration and the second metal stack configuration and further including the bonding pitch can be selected from a menu of BEOL selectable options. Menu selections can be made either by a user (e.g., when presented with the menu via a graphic user interface (GUI) on a display monitor 104) or automatically by a processor 103 based on preliminary design 180 for the 3DIC including partial designs 181-182 (e.g., for first chip 401 and second chip 451) in combination.

Specifically, a menu of 3DIC BEOL selectable options can be developed (e.g., for a PDK). Each line item on the menu can represent a different metal stack configuration, a corresponding last metal level pitch, and a corresponding bonding pitch. In each line item, the bonding pitch is at least as large as the last metal level pitch. The menu could be presented to a user, via a GUI of an EDA tool (e.g., a GUI 141 of design layout tool 140), to facilitate user selection from the menu and/or could be made accessible by a processor for automatic selection from the menu. Two selections can be made, one for each chip. The initial selection (referred to herein as selection A) can be for either the first chip or the second chip and can be made all available selectable options on the menu. The next selection (referred to herein as selection B) can be for the second chip if selection A was for the first chip (or vice versa) and can be made from only a sub-set of the line items and, particularly, only those line items on the menu with the same bonding pitch as selection A.

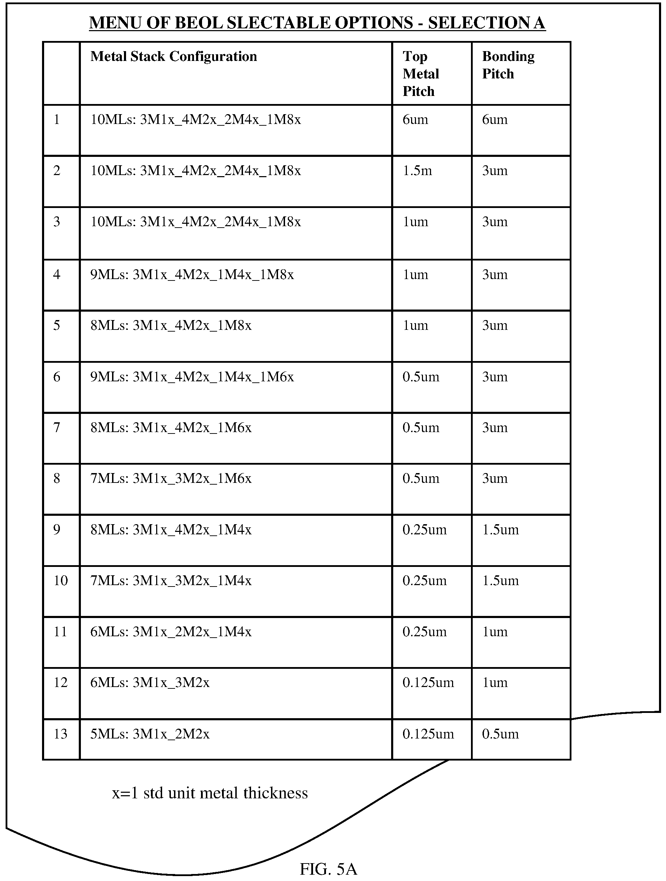

For example, FIG. 5A is a drawing illustrative of a screen shot of an example menu of 3DIC BEOL selectable options available for selection A. Each line item representing a BOEL selectable option available for selection A specifies a metal stack configuration. Each metal stack configuration indicates the total number of metal levels (MLs), such as 10MLs, 9MI,s, 8MI,s, etc. Each metal stack configuration further indicates, of the total number of metal levels, numbers of metal levels having different thicknesses. For example, line items 1-3, each specify a metal stack configuration with ten metal levels of which three have a thickness equal to 1x nanometers (nm), four have a thickness equal to 2x nm, two have a thickness equal to 4x nm, and 1 has a thickness equal to 8x nm; line item 4 specifies a metal stack configuration with 9 metal levels of which three have a thickness equal to 1x nm, four have a thickness equal 2x nm, one has a thickness equal to 4x nm, and 1 has a thickness equal to 8xnm; and so on.

Each line item representing a BOEL selectable option available for selection A further specifies a last metal level pitch. That is, it specifies the pitch of metal features contained in the last metal level. As illustrated, different line items on the menu may have the same last metal level pitch or different last metal level pitches. For example, line items 1-3 have the same metal stack configuration, but different last metal level pitches; line items 3 and 4 have different metal stack configurations, but the same last metal level pitches; and so on.

Each line item representing a BOEL selectable option available for selection A further specifies a bonding pitch. As illustrated, different line items on the menu may have the same bonding pitch or different bonding pitches. For example, line items 1-3 have the same combination of metal levels and thicknesses, but all three have different last metal level pitches, and line item 1 has a larger bonding pitch than line items 2 and 3; line items 3-8 all have different combinations of metal levels and thicknesses, some have different last metal level pitches, but all have the same bonding pitch; and so on. In all line items, the bonding pitch is at least as large or larger than the last metal level pitch.

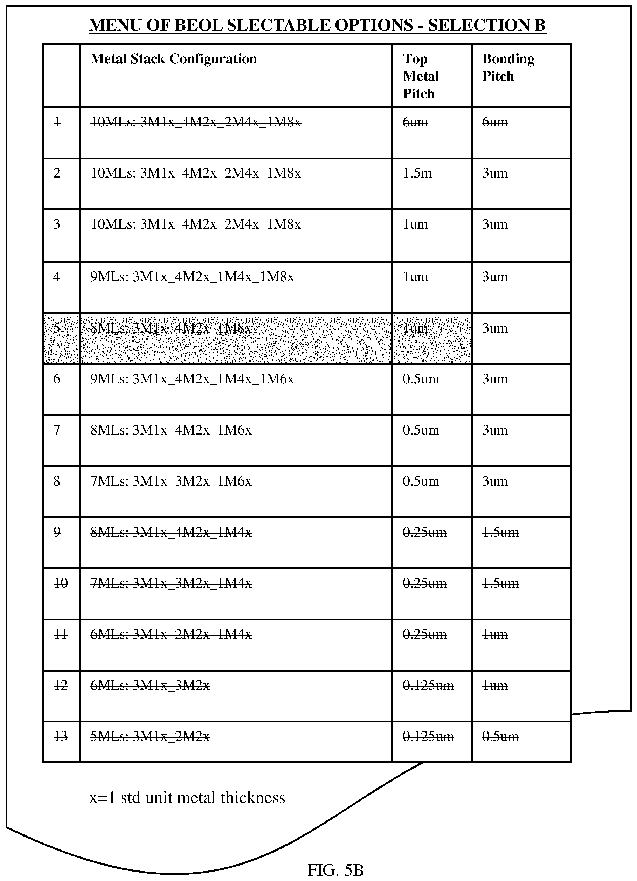

Once selection A is chosen from the menu, the selectable options available for selection B become limited to only those line items on the menu that have the same bonding pitch as specified in selection A. FIG. 5B is a drawing illustrative of a screen shot of an example menu of 3DIC BEOL selectable options available for selection B. For example, if line item 5, which has a bonding pitch of 3 µm, was selection A, then selection B can only be made from line items with that same bonding pitch of 3 µm. Thus, as illustrated in FIG. 5B, since only line items 2-8 have a bonding pitch of 3µm, then line items 1 and 9-13 would be unavailable (i.e., blocked) for selection B.

At process 304, selection A and selection B may be chosen to ensure that the 3DIC will have a minimum total number of metal levels (which is equal to the sum of the total number of first chip metal levels as defined by the first chip metal stack configuration and the total number of the second chip metal levels as defined the second chip metal stack configuration) with a suitable arrangement of thicknesses and pitches to make the necessary electrical connections between components on the first chip, between components on the second chip, and between components on the first chip and on the second chip. Depending upon selections A and B, the first chip metal stack configuration and the second chip metal stack configuration could be the same (i.e., the first chip metal stack configuration and the second chip metal stack configuration could each have the same total number of metal levels with the same arrangement of thickness and pitches). Alternatively, the first chip metal stack configuration and the second chip metal stack configuration could be different. For example, the total number of first chip metal levels can be different from the total number of second chip metal levels and, thus, the arrangement of thicknesses and pitches of the metal levels in each metal stack would also be different. Furthermore, the total number of first chip metal levels and the total number of second chip metal levels could be the same but the arrangement of thicknesses and pitches of the metal levels in each metal stack could vary. It should be understood that combinations of metal stack configuration, last metal level pitch, and bonding pitch shown in the different line items of FIGs. 4 and 5 are provided for illustration purposes only and are not intended to be limiting. Various different combinations of metal stack configuration, last metal level pitch, and bonding pitch could be included on such a menu. These different combinations could be, for example, developed as the PDK is developed or updated based on factors such as cost, manufacturability, etc. By making the bonding pitch at least as large as the first chip last metal level pitch and the second chip last metal level pitch, the design method ensures a PPA advantage by avoiding a bottleneck of current flow from one chip to the other. Additionally, the first chip last metal level (My) and the second chip last metal level (Mz) do not become a bottleneck for available routing resources when determining where to place and connect components or portions thereof on different chips (e.g., when determining where to place and connect second portion 497 of component 495 on second chip 451 relative to first portion 496 of component 495 on first chip 401).

Referring again to the flow diagrams of FIG. 2 and FIG. 3, once a first chip metal stack configuration (including a first chip last metal level pitch), a second chip metal stack configuration (including a second chip last metal level pitch), and a bonding pitch are determined (e.g., per processes 204-206 of FIG. 2 or process 304 of FIG. 3), routing for the 3DIC can be performed (see process 208 of FIG. 2 and process 308 of FIG. 3). Specifically, at process 208 of FIG. 2 or 308 of FIG. 3, placement of vias and/wires within the first chip metal levels and the second chip metal levels (as defined by the first chip metal stack configuration and second chip metal stack configuration, respectively) can be determined in order to make all necessary electrical connections between components on the first chip, between components on the second chip, and between components on the first and second chips can be determined. Routing can be performed based on the preliminary design 180 of the 3DIC (including partial designs 181-182 of the first and second chips), on the first chip metal stack configuration, on the second chip metal stack configuration, on the bonding pitch, etc. Furthermore, routing can be performed using conventional wire routing techniques (e.g., using a wire routing tool for 3DIC designs) and specifically considering the impact of routing on PPA.

Given preliminary design 180 for the 3DIC (including partial designs 181-182 for the first and second chips), the first chip metal stack configuration, the second chip metal stack configuration, the bonding pitch, and the routing, an updated design 184 for the 3DIC can be generated and stored (e.g., in design files 120 of memory 110) (see FIG. 1, process 210 of FIG. 2, and process 310 of FIG. 3). Next, a 3DIC design space exploration analysis can be performed based on updated design 184 to, for example, calculate PPA of the 3DIC (see process 212 of FIG. 2 and process 312 of FIG. 3). Techniques for performing such an analysis of a 3DIC design are known in the art and, thus, the details thereof have been omitted from the specification in order to allow the reader to focus on the salient aspects of the disclosed embodiments. Results of the analysis (i.e., the PPA calculations) can then be compared to pre-established PPA specifications (i.e., desired PPA values) to determine whether or not the PPA specifications have all been met (see process 214 of FIG. 2 and process 314 of FIG. 3). If any of the PPA specifications have not been met, processes 204-216 of FIG. 2 or processes 304-316 of FIG. 3 can be iteratively repeated. Such iterative processing can be performed to change the first metal stack configuration, the first top metal level pitch, the second metal stack configuration, the second top metal level pitch, and/or the bonding pitch. Such iterative processing can be repeated, stopping when the PPA specifications have been met or when a determination is made that one or more of the PPA specifications cannot be met. Once the PPA specifications have been met, a final design 185 for the 3DIC can be generated, stored (e.g., in design files 120 of memory 110), and subsequently released to manufacturing (see process 214 of FIG. 2 and process 314 of FIG. 3).

The methods as described above can be used in the design and fabrication of integrated circuit chips and, particularly, 3DICs. The resulting 3DICs can be manufactured and distributed by the fabricator in raw stacked wafer form (that is, as stacked and bonded wafers that have multiple un-cut and unpackaged 3DICs thereon), as a bare 3DIC, or in a packaged form. In the latter case the 3DIC is mounted in a package (such as a plastic carrier, with leads that are affixed to a motherboard or other higher level carrier) or in a multi-IC package (such as a ceramic carrier that has either or both surface interconnections or buried interconnections). In any case the 3DIC is then integrated with other 2DICs or 3DICs, discrete circuit elements, and/or other signal processing devices as part of either (a) an intermediate product, such as a motherboard, or (b) an end product. The end product can be any product that includes ICs, ranging from toys and other low-end applications to advanced computer products having a display, a keyboard or other input device, and a central processor.

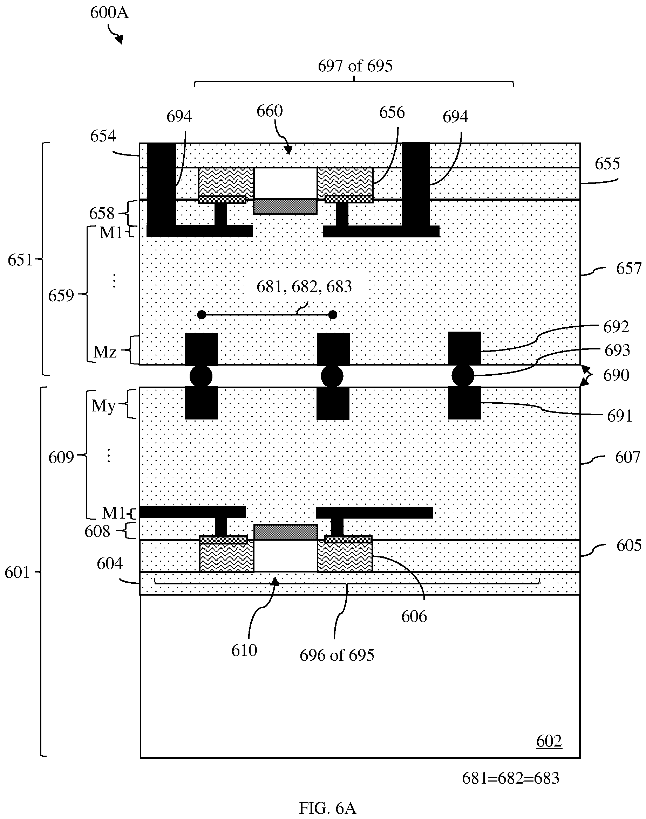

FIGs. 6A-6E are cross-section diagrams illustrating various examples of 3DICs 600A-600E, respectively, which have been designed according to the flow diagram of FIG. 2 or the flow diagram of FIG. 3 discussed in detail above and which have further been manufactured according to a final design 185 for a 3DIC, which has been generated, stored and released to manufacturing at process 218 or 318.

Each 3DIC 600A-600B can include a first chip 601 and a second chip 651. First chip 601 and second chip 651 can, for example, be semiconductor-on-insulator structures, such as radio frequency (RF) silicon-on-insulator (SOI) structures. Alternatively, first chip 601 and second chip 651 could have any other chip structure suitable for incorporation into a 3DIC (e.g., a bulk semiconductor chip structure, such as a bulk silicon chip structure, etc.).

In this example, first chip 601 can include a first chip semiconductor substrate 602 (e.g., a silicon substrate). First chip 601 can further include a first chip insulator layer 604 on first chip semiconductor substrate 602. First chip insulator layer 604 can be, for example, an oxide layer (also referred to herein as a buried oxide layer), such as a silicon dioxide layer. Alternatively, first chip insulator layer 604 could include a layer of any other suitable insulator material. First chip 601 can further include a first chip semiconductor layer 606 (e.g., a monocrystalline semiconductor layer, such as a monocrystalline silicon layer or some other suitable monocrystalline semiconductor layer) on first chip insulator layer 604. First chip 601 can further include one or more first chip FEOL devices. Active device regions of first chip FEOL devices can be within first chip semiconductor layer 606. These active device regions can, for example, be defined first chip STI regions 605 that extend vertically through first chip semiconductor layer 606 to, into, or through first chip insulator layer 604.

For purposes of illustration, only a single first chip FEOL device (e.g., a first chip transistor 610) is shown on first chip 601. It should be understood that first chip 601 can include multiple first chip FEOL devices of the same or different types. Such first chip FEOL devices can be, for example, incorporated into other devices, circuits, logic blocks, etc., which are either found entirely on the first chip or which are split into portions on the first chip and the second chip. For example, first chip transistor 610 could be included in one portion 696 of a component 695 (e.g., a device, circuit, logic block, etc.) on first chip 601 and another portion 697 of the same component 695 can be on a second chip 651, as discussed below. First chip 601 can further include a first chip MOL region 608. First chip MOL region 608 can include one or more first chip MOL dielectric layers over the first chip FEOL device(s) and one or more first chip MOL contacts extending through first chip MOL dielectric layer(s) (e.g., to first chip FEOL device(s)).

First chip 601 can further include a first chip BEOL region 609 adjacent to first chip MOL region 608. First chip BEOL region 609 can include first chip metal levels (M1-My). Of the first chip metal levels, first chip first metal level (M1) is adjacent to first chip MOL region 608 and first chip last metal level (My) is farthest from first chip MOL region 608. The number (y) of My indicates the total number of first chip metal levels in first chip BEOL region 609. First chip BEOL region 609 can have a specific first metal stack configuration. The first metal stack configuration refers at least to the total number (y) of first chip metal levels (M1-My) and, of the first chip metal levels (M1-My), the levels having different thicknesses. For example, the first chip metal stack configuration could specify the total number (y) of first chip metal levels and, of those first chip metal levels: the number with a thickness equal to x nanometers (nm), the number with a thickness equal to 2x nm, the number with a thickness equal to 3x nm, the number with a thickness equal to 4x, and so on. The first chip metal stack configuration can further indicate the pitches of the different first chip metal levels M1-My including the first chip last metal level pitch 681 (i.e., the pitch of metal features in the last metal level (My) of the first chip metal levels). As mentioned above, for purposes of this disclosure, metal level thickness refers to the maximum height of metal features (e.g., vias and/or wires) within a given metal level. Metal level pitch refers to the linear distance between center lines through adjacent metal features within a given metal level. It should be noted that within the figures item 607 represents interlayer dielectric (ILD) material on the first chip including first chip MOL and BEOL dielectric layers. Additionally, item 691 represents metal features in the first chip last metal level (My).

Second chip 651 can include a second chip insulator layer 654. Second chip insulator layer 654 can be, for example, an oxide layer (also referred to herein as a buried oxide layer), such as a silicon dioxide layer. Alternatively, second chip insulator layer 654 could include a layer of any other suitable insulator material. Second chip 651 can further include a second chip semiconductor layer 656 (e.g., a monocrystalline semiconductor layer, such as a monocrystalline silicon layer or some other suitable monocrystalline semiconductor layer) on second chip insulator layer 654. Second chip 651 can further include one or more second chip FEOL devices. The active device regions of the second chip FEOL devices can be within second semiconductor layer 656. These active device regions can further be defined by, for example, second chip STI regions 655 that extend through second chip semiconductor layer 656 to second chip insulator layer 654. For purposes of illustration, only a single second chip FEOL device (e.g., a second chip transistor 660) is shown on second chip 651. It should be understood that second chip 651 can include multiple second chip FEOL devices of the same or different types. Such second chip FEOL devices can be, for example, incorporated into other devices, circuits, logic blocks, etc., which are either found entirely on the second chip or which are split into portions on the first chip and the second chip. For example, second chip transistor 660 could be included in one portion 697 of a component 695 (e.g., a device, circuit, logic block, etc.) on second chip 651 and, as discussed above, a different portion 696 of the same component 695 can be on first chip 601. Second chip 651 can further include: a second chip MOL region 658 including one or more second chip MOL dielectric layers over the second chip FEOL device(s) and one or more second chip MOL contacts extending through the second chip MOL dielectric layer(s) (e.g., to second chip FEOL device(s)).

Second chip 651 can further include a second chip BEOL region 659 on the second chip MOL region 658. Second chip BEOL region 659 can include second chip metal levels (M1-Mz). Of the second chip metal levels (M1-Mz), a second chip first metal level (M1) can be adjacent to the second chip MOL region 658 and a second chip last metal level (Mz) can be farthest from second chip MOL region 658. Second chip BEOL region 659 can have a specific second chip metal stack configuration. The second chip metal stack configuration refers at least to the total number (z) of second chip metal levels and, of the second chip metal levels, the levels having different thicknesses. For example, the second chip metal stack configuration could specify the total number (z) of second chip metal levels and of those second chip metal levels: the number with a thickness equal to 1x nm, the number with a thickness equal to 2x nm, the number with a thickness equal to 3x nm, the number with a thickness equal to 4x nm, and so on. The second chip metal stack configuration can further indicate the pitches of the different second chip metal levels M1-Mz including the second chip last metal level pitch 682 (i.e., the pitch of metal features in the last metal level (Mz) of the second chip metal levels). It should be noted that within the figures item 657 represents interlayer dielectric (ILD) material on the second chip including second chip MOL and BEOL dielectric layers. Additionally, item 692 represents metal features in the second chip last metal level (Mx).

Second chip 651 can be flipped relative to first chip 601 and stacked thereon such that second chip last metal level (Mz) is adjacent to first chip last metal level (My) and adjacent surfaces 690 of these two metal levels can be bonded together via conductive bonding elements 693. The conductive bonding elements 693 can further provide electrical connections between first chip 601 and second chip 651 and, particularly, between at least some metal features 691 in the first chip last metal level and some metal features 692 in the second chip last metal level. For purposes of illustration, bonding elements 693 are shown in FIGs. 6A-6E as being bump-type bonding elements. However, it should be understood that the bonding elements could be any suitable type of bonding element used for wafer-to-wafer bonding, chip-to-wafer bonding, chip-to-chip bonding, etc. For example, such bonding elements 693 could be bump-type bonding elements such as solder bumps, controlled collapse of chip connection (C4) bumps, micro-bumps, or the like. Alternatively, such bonding elements 693 could be conductive pads (e.g., copper pads) embedded in the top metal level and used for hybrid bonding (also referred to in the art as direct bond interconnect (DBI) bonding). Such bonding elements are well known in the art and, thus, the details thereof have been omitted from this specification. However, it should be noted that a smaller bonding pitch can be achieved with hybrid wafer bonding and die on wafer bonding over bump-type bonding.

In each of the embodiments, 3DIC 600A-600E can further include one or more through substrate vias (TSVs). For example, as illustrated, a TSV 694 can extend through second chip insulator layer 654, a second chip STI region 655, and second chip MOL region 658 to land on one of the second chip metal levels. Other TSVs (not illustrated) could include, but are not limited to, a TSV extending from back side of second chip insulator 654 to a component on first chip 601, a TSV extending from back side of first chip semiconductor substrate 602 to a first chip metal level or through to a component on the second chip, etc. Such TSVs can provide electrical connections between I/O pads on back sides of the first chip 601 and/or the second chip 651 and one or more component(s) on the first chip 601 and/or the second chip 651.

To avoid clutter in FIGs. 6A-6E, any first chip metal level between the first chip first metal level and the first chip last metal level (M1-My) and any second chip metal levels between the second chip first metal level and the second chip last metal level (M1-Mz) have been omitted from the drawings. However, it should be understood that the total number (y) of first chip metal levels can be two or more and the total number (z) of second chip metal layers can similarly be two or more. Furthermore, the maximum allowable number of metal levels on either chip can be dependent on the given technology node (e.g., as specified by the PDK).

Given the design methods discussed above, the first chip metal stack configuration of first chip 601 can be the same as the second chip metal stack configuration of second chip 651. That is, first chip 601 and second chip 651 can each have the same number of metal levels with the same arrangement of thicknesses and pitches. Alternatively, the first chip metal stack configuration of first chip 601 and the second chip metal stack configuration of second chip 651 can be different (e.g., they can have different numbers of metal levels, they can have metal levels with different thicknesses and/or they can have metal levels with different pitches). It should be understood that the metal thickness and pitch of adjacent first chip metal levels can be the same or different, but generally the metal thickness and pitch will increase between the first chip first metal level (M1) and the first chip last metal level (My). Similarly, the metal thickness and pitch of adjacent second metal levels can be the same or different, but generally the metal thickness and pitch will increase between the second chip first metal level (M1) and the second chip last metal level (Mz). In any case, the sum of the total number (y) of first chip metal levels as specified by the first chip metal stack configuration and the total number (y) of second chip metal levels as specified by the second chip metal stack configuration will ideally be less than the sum of the total numbers of metal layers on each of the two chips if they were not to be incorporated into a 3DIC. Additionally, given the design methods discussed above, bonding elements 693 can have a bonding pitch 683 that is at least as large or larger than the first chip last metal level pitch 681 and also at least as large or larger than the second chip last metal level pitch 682. As mentioned above, the bonding pitch refers to the linear distance between center lines through adjacent bonding elements used to bond a first chip to a second chip.

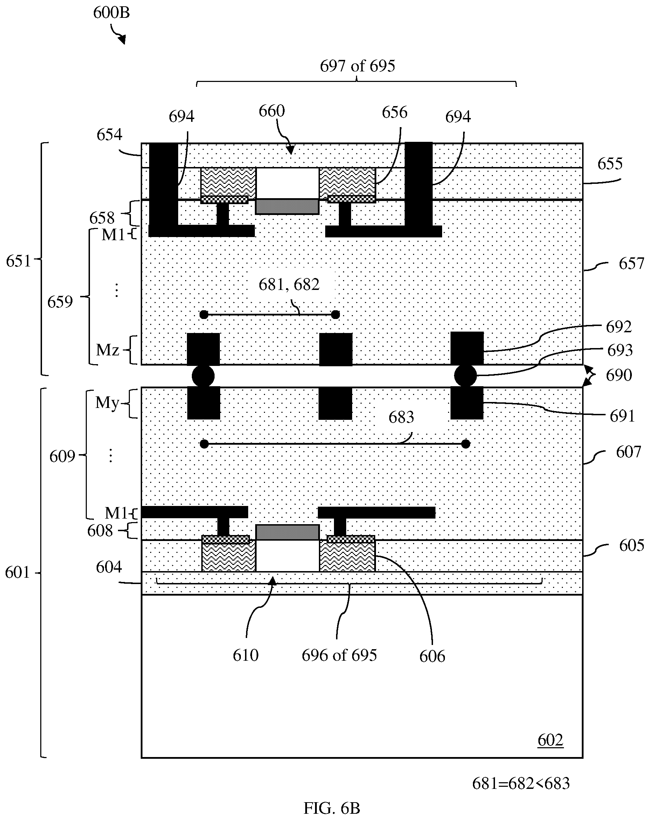

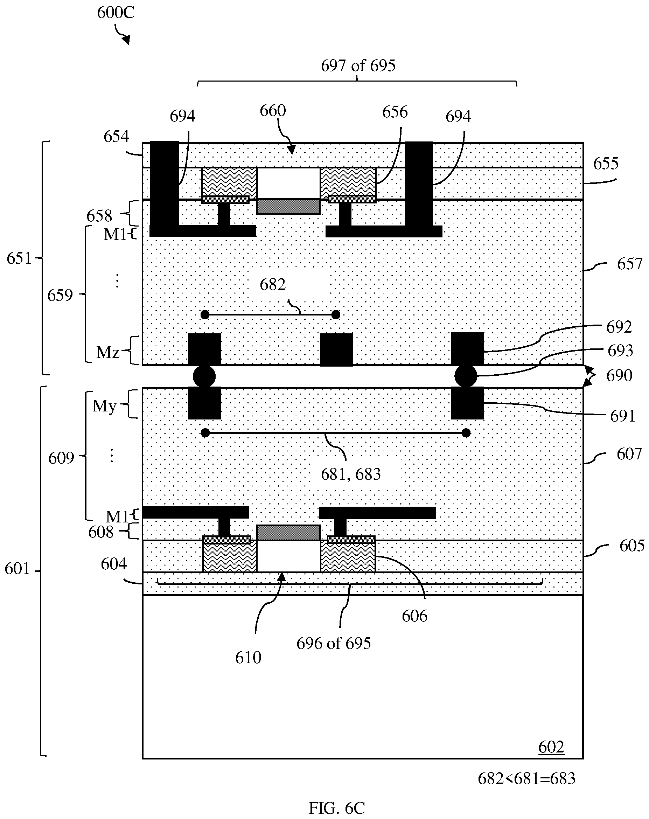

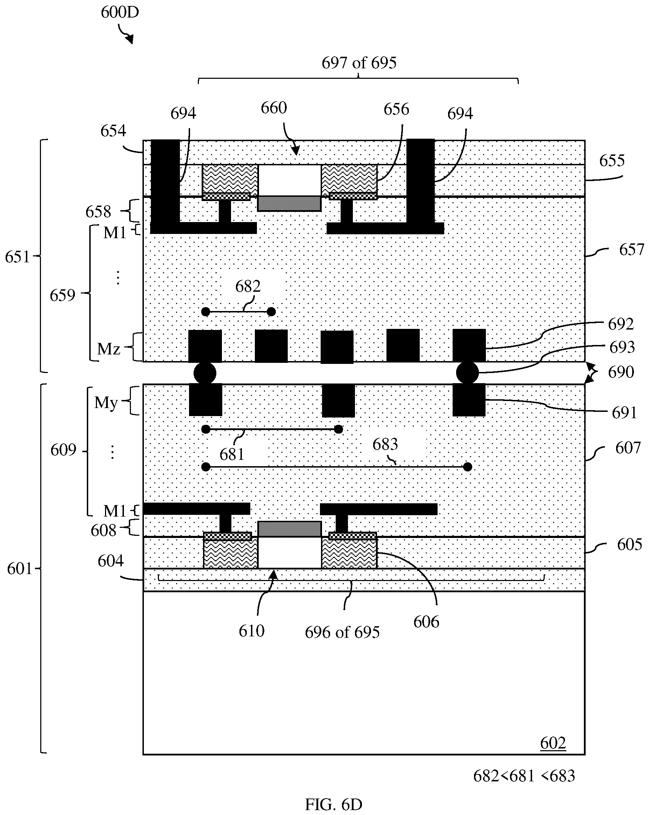

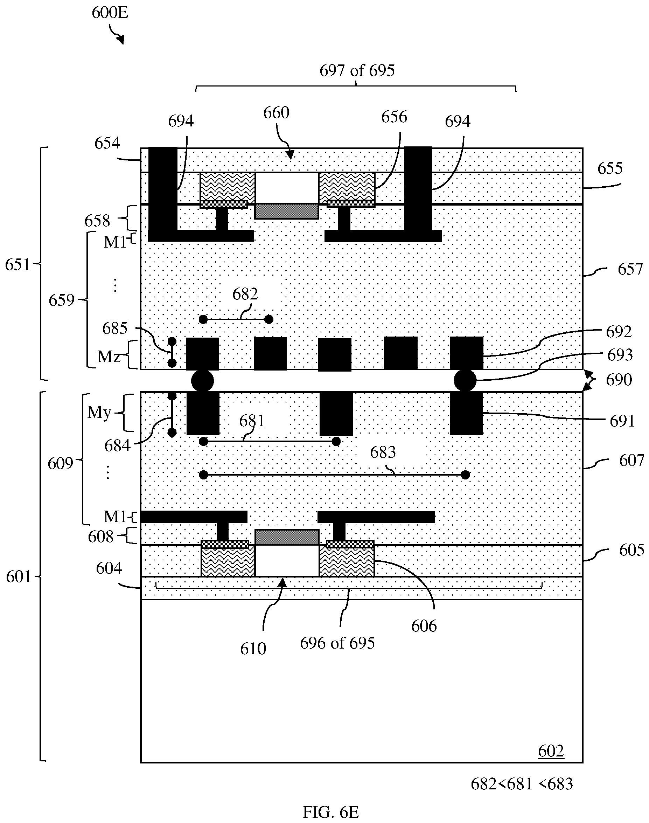

FIG. 6A is a cross-section drawing illustrating an example of a 3DIC 600A where bonding pitch 683 matches both first chip last metal level pitch 681 and second chip last metal level pitch 682. FIG. 6B is a cross-section drawing illustrating another example of a 3DIC 600B where first chip last metal level pitch 681 and second chip last metal level pitch 682 are the same and where bonding pitch 683 is larger than first chip last metal level pitch 681 and second chip last metal level pitch 682. FIG. 6C is a cross-section drawing illustrating yet another example of a 3DIC 600C where first chip last metal level pitch 681 and bonding pitch 683 are the same and second chip last metal level pitch 682 is smaller than bonding pitch 683 and first chip last metal level pitch 681. FIG. 6D is a cross-section drawing illustrating yet another example of a 3DIC 600D where bonding pitch 683 is larger than first chip last metal level pitch 681 and second chip last metal level pitch 682 and where first chip last metal level pitch 681 is larger than second chip last metal level pitch 682. FIG. 6E is a cross-section drawing illustrating yet another example of a 3DIC 600E where bonding pitch 683 is larger than first chip last metal level pitch 681 and second chip last metal level pitch 682, where first chip last metal level pitch 681 is larger than second chip last metal level pitch 682, and further where the first chip last metal level thickness 684 is greater than the second chip last metal level thickness 685. It should be noted that all aspects, examples, and features of disclosed 3DIC embodiments mentioned in the detailed description and illustrated in FIGs. 6A-6E can be combined in any technically possible way. That is, two or more aspects of any of the disclosed embodiments, including those described above and illustrated in the figures, may be combined to form implementations not specifically described herein and/or illustrated in the figures.

It should be understood that first chip 601 and second chip 651 are shown in FIGs. 6A-6E and described above as being semiconductor-on-insulator structures for purposes of illustration. Alternatively, first chip and second chip could be bulk semiconductor structures (e.g., bulk silicon structures), or any other type of semiconductor structure or combination thereof suitable for either 2DIC or 3DIC formation.

Embodiments disclosed herein may be a system, a method, and/or a computer program product. The computer program product may include a computer readable storage medium (or media) having computer readable program instructions thereon for causing a processor to carry out aspects of the disclosed embodiments.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the disclosed embodiments may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the disclosed embodiments.

Aspects of the disclosed embodiments are described herein with reference to flowchart illustrations and/or block diagrams of methods, apparatus (systems), and computer program products according to disclosed embodiments. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of systems, methods, and computer program products according to various disclosed embodiments. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

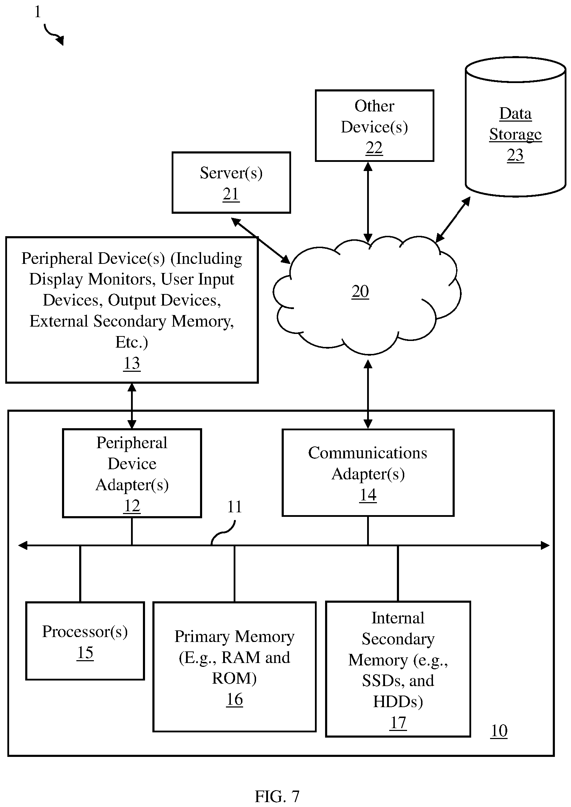

An illustrative hardware environment 1 for implementing aspects of the disclosed systems, methods and computer program products is depicted in FIG. 7. Generally, hardware environment 1 can include at least one computing device 10 (also referred to herein as a computer). Computer 10 can be, for example, a desktop, laptop, tablet, mobile computing device, etc. Computer 10 can include at least one system bus 11. Bus 11 can be connected to various other components of computer 10 and can be configured to facilitate communication between those components.

Computer 10 can include various adapters. The adapters can include one or more peripheral device adapters 12, which are configured to facilitate communications between one or more peripheral devices 13, respectively, and bus 11. Peripheral devices 13 can include user input devices configured to receive user inputs. User input devices can include, but are not limited to, a keyboard, a mouse, a microphone, a touchpad, a touchscreen, a stylus, bio-sensor, a scanner, or any other type of user input device. Peripheral devices 13 can also include additional input devices, such as external secondary memory devices (as discussed in greater detail below). Peripheral devices 13 can also include output devices. The output devices can include, but are not limited to, a printer, a monitor, a speaker, or any other type of computer output device. The adapters can include one or more communications adapters 14 (also referred to herein as a computer network adapters), which are configured to facilitate communications between computer 10 and one or more communications networks 20 (e.g., a wide area network (WAN), a local area network (LAN), the internet, a cellular network, a Wi-Fi network, etc.). Such communications network(s) 20 can, in turn, facilitate communications between computer 10 and other system components on the network: remote server(s) 21, other device(s) 22 (e.g., computers, laptops, tablets, mobile phones, etc.), remote data storage 23, etc.

Computer 10 can further include at least one processor 15 (also referred to herein as a central processing units (CPU)). Optionally, each CPU 15 can include a CPU cache. Each CPU 15 can be configured to read and execute program instructions.

Computer 10 can further include memory and, particularly, computer-readable storage mediums. The memory can include primary memory 16 and secondary memory. The primary memory 16 can include, but is not limited to, random access memory (RAM) (e.g., volatile memory employed during execution of program operations) and read only memory (ROM) (e.g., non-volatile memory employed during start-up). The RAM can include, but is not limited to, dynamic random access memory (DRAM), static random access memory (SRAM), or any other suitable type of RAM. The ROM can include, but is not limited to, erasable programmable read only memory (EPROM), flash memory, electronically erasable programmable read only memory (EEPROM), programmable read only memory (PROM), or any other suitable type of ROM. The secondary memory can be non-volatile. The secondary memory can include internal secondary memory 17, such as internal solid state drive(s) (SSD(s)) and/or internal hard disk drive(s) (HDD(s), installed on computer 10 and connected to bus 11. The secondary memory can also include external secondary memory connected to or otherwise in communication with computer 10. The external secondary memory can include, for example, external/portable SSD(s), external/portable HDD(s), flash drive(s), thumb drives, compact disc(s) (CD(s)), digital video disc(s) (DVD(s)), network-attached storage (NAS), storage area network (SAN), or any other suitable non-transitory computer-readable storage media connected to or otherwise in communication with computer 10. The different functions of primary and secondary memory are well known in the art and, thus, the details thereof have been omitted from this specification in order to allow the reader to focus on the salient aspects of the disclosed embodiments.

In some embodiments, program instructions for performing the disclosed computer-implemented design method or a portion thereof, as described above, can be embodied in (e.g., stored in) secondary memory accessible by the computer 10. When the program instructions are to be executed (e.g., in response to user inputs to computer 10), required information (e.g., the program instructions and other data) can be loaded into primary memory (e.g., stored in RAM). CPU 15 can read the program instructions and other data from the RAM and can execute the program instructions. In other embodiments, a client-server model can be employed. In this case, computer 10 can be a client device and a remote server 21 in communication with computer 10 over a communications network 20 can provide, to the client, a service including execution of program instructions for performing the disclosed design method or a portion thereof, as described above, in response to user inputs the computer 10.

In the method and structure embodiments described above, a semiconductor material refers to a material whose conducting properties can be altered by doping with an impurity. Example semiconductor materials include, for example, silicon-based semiconductor materials (e.g., silicon, silicon germanium, silicon germanium carbide, silicon carbide, etc.) and III-V compound semiconductors (i.e., compounds obtained by combining group III elements, such as aluminum (Al), gallium (Ga), or indium (In), with group V elements, such as nitrogen (N), phosphorous (P), arsenic (As) or antimony (Sb)) (e.g., GaN, InP, GaAs, or GaP). A pure semiconductor material and, more particularly, a semiconductor material that is not doped with an impurity for the purposes of increasing conductivity (i.e., an undoped semiconductor material) is referred to in the art as an intrinsic semiconductor. A semiconductor material that is doped with an impurity for the purposes of increasing conductivity (i.e., a doped semiconductor material) is referred to in the art as an extrinsic semiconductor and will be more conductive than an intrinsic semiconductor made of the same base material. That is, extrinsic silicon will be more conductive than intrinsic silicon; extrinsic silicon germanium will be more conductive than intrinsic silicon germanium; and so on. Furthermore, it should be understood that different impurities (i.e., different dopants) can be used to achieve different conductivity types (e.g., P-type conductivity and N-type conductivity) and that the dopants may vary depending upon the different semiconductor materials used. For example, a silicon-based semiconductor material (e.g., silicon, silicon germanium, etc.) is typically doped with a Group III dopant, such as boron (B) or indium (In), to achieve P-type conductivity, whereas a silicon-based semiconductor material is typically doped a Group V dopant, such as arsenic (As), phosphorous (P) or antimony (Sb), to achieve N-type conductivity. A gallium nitride (GaN)-based semiconductor material is typically doped with magnesium (Mg) to achieve P-type conductivity and with silicon (Si) or oxygen to achieve N-type conductivity. Those skilled in the art will also recognize that different conductivity levels will depend upon the relative concentration levels of the dopant(s) in a given semiconductor region.

The terminology used herein is for the purpose of describing the disclosed structures and methods and is not intended to be limiting. For example, as used herein, the singular forms "a," "an," and "the" are intended to include the plural forms as well, unless the context clearly indicates otherwise. Additionally, as used herein, the terms "comprises," "comprising," "includes," and/or "including" specify the presence of stated features, integers, steps, operations, elements, and/or components, but do not preclude the presence or addition of one or more other features, integers, steps, operations, elements, components, and/or groups thereof. Furthermore, as used herein, terms such as "right," "left," "vertical," "horizontal," "top," "bottom," "upper," "lower," "under," "below," "underlying," "over," "overlying," "parallel," "perpendicular," etc., are intended to describe relative locations as they are oriented and illustrated in the drawings (unless otherwise indicated) and terms such as "touching," "in direct contact," "abutting," "directly adjacent to," "immediately adjacent to," etc., are intended to indicate that at least one element physically contacts another element (without other elements separating the described elements). The term "laterally" is used herein to describe the relative locations of elements and, more particularly, to indicate that an element is positioned to the side of another element as opposed to above or below the other element, as those elements are oriented and illustrated in the drawings. For example, an element that is positioned laterally adjacent to another element will be beside the other element, an element that is positioned laterally immediately adjacent to another element will be directly beside the other element, and an element that laterally surrounds another element will be adjacent to and border the outer sidewalls of the other element. The corresponding structures, materials, acts, and equivalents of all means or step plus function elements in the claims below are intended to include any structure, material, or act for performing the function in combination with other claimed elements as specifically claimed.

The method as described above is used in the fabrication of integrated circuit chips. The resulting integrated circuit chips can be distributed by the fabricator in raw wafer form (that is, as a single wafer that has multiple unpackaged chips), as a bare die, or in a packaged form. In the latter case the chip is mounted in a single chip package (such as a plastic carrier, with leads that are affixed to a motherboard or other higher level carrier) or in a multichip package (such as a ceramic carrier that has either or both surface interconnections or buried interconnections). In any case the chip is then integrated with other chips, discrete circuit elements, and/or other signal processing devices as part of either (a) an intermediate product, such as a motherboard, or (b) an end product. The end product can be any product that includes integrated circuit chips, ranging from toys and other low-end applications to advanced computer products having a display, a keyboard or other input device, and a central processor.

The descriptions of the various disclosed embodiments have been presented for purposes of illustration but are not intended to be exhaustive or limiting. Many modifications and variations will be apparent to those of ordinary skill in the art without departing from the scope and spirit of the disclosed embodiments. The terminology used herein was chosen to best explain the principles of the embodiments, the practical application or technical improvement over technologies found in the marketplace, or to enable others of ordinary skill in the art to understand the embodiments disclosed herein.

In summary, a three-dimensional integrated circuit (3DIC) design method and system includes metal stack and bonding pitch optimization to improve power, performance, and area (PPA). The resulting 3DIC includes a first chip and a second chip. A last metal level of the second chip can be bonded to the last metal level of the first chip by bonding elements. The bonding pitch of the bonding elements can be at least as large as the pitches of the first chip last metal level and the second chip last metal level. The metal stack configurations of each chip may be the same or different. With different metal stack configurations, the total numbers of metal levels on each chip, the thicknesses of the metal levels on each chip and/or the pitches of the last metal levels on each chip may be different.
The following embodiments are explicitly disclosed.
Embodiment 1: A structure comprising:
   a first chip having first chip metal levels including a first chip last metal level, wherein the first chip last metal level has a first chip last metal level pitch;
   a second chip having second chip metal levels including a second chip last metal level, wherein the second chip last metal level has a second chip last metal level pitch; and
   bonding elements connecting the first chip last metal level and the second chip last metal level, wherein the bonding elements have a bonding pitch that is at least as large as the first chip last metal level pitch and at least as large as the second chip last metal level pitch.
Embodiment 2: The structure of embodiment 1, wherein the bonding pitch matches any of the first chip last metal level pitch and the second chip last metal level pitch.
Embodiment 3: The structure of embodiment 1 or 2, wherein the bonding pitch is larger than any of the first chip last metal level pitch and the second chip last metal level pitch.
Embodiment 4: The structure of one of embodiments 1 to 3, wherein the bonding pitch matches both the first chip last metal level pitch and the second chip last metal level pitch.
Embodiment 5: The structure of one of embodiments 1 to 4, wherein the first chip and the second chip have equal numbers of metal levels.
Embodiment 6: The structure of embodiment 5, wherein the first chip metal levels are arranged in a first chip metal stack configuration, and wherein the second chip metal levels are arranged in a second chip metal stack configuration different from the first chip metal stack configuration.
Embodiment 7: The structure of embodiment 5 or 6, wherein the first chip metal levels are arranged in a first chip metal stack configuration, and wherein the second chip metal levels are arranged in a second chip metal stack configuration that is the same as the first chip metal stack configuration.
Embodiment 8: The structure of one of embodiments 1 to 7, wherein the first chip and the second chip have different numbers of metal levels, wherein the first chip metal levels are arranged in a first chip metal stack configuration, and wherein the second chip metal levels are arranged in a second chip metal stack configuration different from the first chip metal stack configuration.
Embodiment 9: The structure of one of embodiments 1 to 8,
   wherein the first chip includes a first chip substrate,
   wherein the second chip includes a second chip substrate, and
   wherein the first chip substrate and the second chip substrate have different layers.
Embodiment 10: The structure of embodiment 9,
   wherein the first chip substrate includes a first portion of a logic block, and
   wherein the second chip substrate includes a second portion of the logic block electrically connected to the first portion through the second chip metal levels, the first chip metal levels, and at least one of the bonding elements.
Embodiment 11: The structure of one of embodiments 1 to 10, wherein the bonding elements include bumps associated with bump bonding.
Embodiment 12: The structure of one of embodiments 1 to 11, wherein the bonding elements include pads.
Embodiment 13: A method comprising:
   accessing, by a processor from a memory, a preliminary design of a three-dimensional integrated circuit (3DIC) including partial designs for a first chip and a second chip of the 3DIC, wherein the partial designs are devoid of metal levels;
   based on the preliminary design of the 3DIC, determining, by the processor:
      a first chip metal stack configuration for first chip metal levels of the first chip, wherein the first chip metal stack configuration defines a first chip last metal level pitch;
      a second chip metal stack configuration for second chip metal levels of the second chip, wherein the second chip metal stack configuration defines a second chip last metal level pitch; and
      a bonding pitch for bonding elements between the first chip and the second chip, wherein the bonding pitch is at least as large as the first chip last metal level pitch and the second chip last metal level pitch;
   determining, by the processor, routing for the 3DIC, wherein the routing is determined based on the partial designs for the first chip and the second chip, the first chip metal stack configuration, the second chip metal stack configuration, and the bonding pitch; and
   generating, by the processor, an updated design for the 3DIC including the first chip, the second chip, the first chip metal stack configuration, the second chip metal stack configuration, the bonding pitch, and the routing.
   In examples herein, the 3DIC may include partial designs for the structure of one of embodiments 1 to 12 with the first chip and the second chip of this structure.
Embodiment 14: The method of embodiment 13, further comprising:
   performing, by the processor, an analysis of any of power, performance, and area using the updated design for the 3DIC;
   determining, by the processor, whether the updated design for the 3DIC meets at least one power, performance, or area specification based on results of the analysis; and
   when the updated design for the 3DIC fails to meet the at least one power, performance, or area specification, iteratively repeating, by the processor, the determining of the first chip metal stack configuration, the second chip metal stack configuration, the bonding pitch, and the routing.
Embodiment 15: The method of embodiment 13 or 14, wherein the bonding pitch any of:
   matches the first chip last metal level pitch and the second chip last metal level pitch;
   matches one of the first chip last metal level pitch and the second chip last metal level pitch; and
   is larger than any of the first chip last metal level pitch and the second chip last metal level pitch.
Embodiment 16: The method of one of embodiments 13 to 15, wherein the first chip last metal level pitch and the second chip last metal level pitch are any of the same and different, and wherein the first chip metal stack configuration and the second chip metal stack configuration are any of the same and different.
Embodiment 17: A method comprising:
   receiving, by a processor from a user through a graphic user interface, two selections from a menu,
      wherein the selections are based on a preliminary design of a three-dimensional integrated circuit (3DIC) that includes partial designs for a first chip and a second chip of the 3DIC,
      wherein the partial designs of the first chip and the second chip are devoid of any metal levels,
      wherein the menu includes selectable options, each option specifying a metal stack configuration including a last metal level pitch and further specifying a bonding pitch at least as large as the last metal level pitch,
      wherein the two selections include: an initial selection from the menu and a subsequent selection from only the selectable options on the menu that have the same bonding pitch as the initial selection, and
      wherein the two selections indicate:
         a first chip metal stack configuration for first chip metal levels of the first chip, wherein the first chip metal stack configuration defines a first chip last metal level pitch;
         a second chip metal stack configuration for second chip metal levels of the second chip, wherein the second chip metal stack configuration defines a second chip last metal level pitch; and
         the bonding pitch for bonding elements connecting the first chip and the second chip in the 3DIC;
   determining, by the processor, routing for the 3DIC, wherein the routing is determined based on the partial designs for the first chip and the second chip and further based on the two selections; and
   generating, by the processor, an updated design for the 3DIC including the first chip, the second chip, the first chip metal stack configuration, the second chip metal stack configuration, the bonding pitch, and the routing.
   In examples herein, the 3DIC may include partial designs for the structure of one of embodiments 1 to 12 with the first chip and the second chip of this structure.
Embodiment 18: The method of embodiment 17,
   performing, by the processor, an analysis of any of power, performance, and area given the updated design for the 3DIC;
   determining, by the processor, whether the updated design for the 3DIC meets at least one power, performance, or area specification based on results of the analysis; and
   when the updated design for the 3DIC fails to meet the at least one power, performance, or area specification, iteratively repeating the receiving of the two selections and the determining of the routing.
Embodiment 19: The method of embodiment 17 or 18, wherein the bonding pitch any of:
   matches the first chip last metal level pitch and the second chip last metal level pitch;
   matches one of the first chip last metal level pitch and the second chip last metal level pitch; and
   is larger than any of the first chip last metal level pitch and the second chip last metal level pitch.
Embodiment 20: The method of one of embodiments 17 to 19, wherein the first chip last metal level pitch and the second chip last metal level pitch are any of the same and different, and wherein the first chip metal stack configuration and the second chip metal stack configuration are any of the same and different.
At least in the embodiments above, the term "include" and its variants may be interpreted as meaning that an embodiment includes stated features, while not necessarily excluding the presence of other features that are not explicitly stated.

## Claims

1. A structure comprising:
a first chip having first chip metal levels including a first chip last metal level, wherein the first chip last metal level has a first chip last metal level pitch;
a second chip having second chip metal levels including a second chip last metal level, wherein the second chip last metal level has a second chip last metal level pitch; and
bonding elements connecting the first chip last metal level and the second chip last metal level, wherein the bonding elements have a bonding pitch that is at least as large as the first chip last metal level pitch and at least as large as the second chip last metal level pitch.

2. The structure of claim 1, wherein the bonding pitch matches any of the first chip last metal level pitch and the second chip last metal level pitch.

3. The structure of claim 1, wherein the bonding pitch is larger than any of the first chip last metal level pitch and the second chip last metal level pitch.

4. The structure of claim 1, wherein the bonding pitch matches both the first chip last metal level pitch and the second chip last metal level pitch.

5. The structure of one of claims 1 to 4, wherein the first chip and the second chip have equal numbers of metal levels.

6. The structure of claim 5, wherein the first chip metal levels are arranged in a first chip metal stack configuration, and wherein the second chip metal levels are arranged in a second chip metal stack configuration different from the first chip metal stack configuration.

7. The structure of claim 5 or 6, wherein the first chip metal levels are arranged in a first chip metal stack configuration, and wherein the second chip metal levels are arranged in a second chip metal stack configuration that is the same as the first chip metal stack configuration.

8. The structure of one of claims 1 to 4, wherein the first chip and the second chip have different numbers of metal levels, wherein the first chip metal levels are arranged in a first chip metal stack configuration, and wherein the second chip metal levels are arranged in a second chip metal stack configuration different from the first chip metal stack configuration.

9. The structure of one of claims 1 to 8,
wherein the first chip includes a first chip substrate,
wherein the second chip includes a second chip substrate, and
wherein the first chip substrate and the second chip substrate have different layers.

10. The structure of claim 9,
wherein the first chip substrate includes a first portion of a logic block, and
wherein the second chip substrate includes a second portion of the logic block electrically connected to the first portion through the second chip metal levels, the first chip metal levels, and at least one of the bonding elements.

11. The structure of one of claims 1 to 10, wherein the bonding elements include at least one of bumps associated with bump bonding and pads.

12. A method comprising:
one of:
- accessing, by a processor from a memory, a preliminary design of a three-dimensional integrated circuit (3DIC) including partial designs for a first chip and a second chip of the 3DIC, wherein the partial designs are devoid of metal levels, or
- receiving, by a processor from a user through a graphic user interface, two selections from a menu, wherein the selections are based on the preliminary design the 3DIC, the partial designs being devoid of metal levels,
wherein the menu includes selectable options, each option specifying a metal stack configuration including a last metal level pitch and further specifying a bonding pitch at least as large as the last metal level pitch,
wherein the two selections include: an initial selection from the menu and a subsequent selection from only the selectable options on the menu that have the same bonding pitch as the initial selection, and
wherein the two selections indicate:
a first chip metal stack configuration for first chip metal levels of the first chip, wherein the first chip metal stack configuration defines a first chip last metal level pitch;
a second chip metal stack configuration for second chip metal levels of the second chip, wherein the second chip metal stack configuration defines a second chip last metal level pitch; and
the bonding pitch for bonding elements connecting the first chip and the second chip in the 3DIC; and
the method further comprising, when accessing the preliminary design:
determining, by the processor based on the preliminary design of the 3DIC:
a first chip metal stack configuration for first chip metal levels of the first chip, wherein the first chip metal stack configuration defines a first chip last metal level pitch;
a second chip metal stack configuration for second chip metal levels of the second chip, wherein the second chip metal stack configuration defines a second chip last metal level pitch; and
a bonding pitch for bonding elements between the first chip and the second chip, wherein the bonding pitch is at least as large as the first chip last metal level pitch and the second chip last metal level pitch;
determining, by the processor, routing for the 3DIC, wherein the routing is determined based on the partial designs for the first chip and the second chip, the first chip metal stack configuration, the second chip metal stack configuration, and the bonding pitch; and
generating, by the processor, an updated design for the 3DIC including the first chip, the second chip, the first chip metal stack configuration, the second chip metal stack configuration, the bonding pitch, and the routing; or
the method further comprising, when receiving the two selections:
determining, by the processor, routing for the 3DIC, wherein the routing is determined based on the partial designs for the first chip and the second chip and further based on the two selections; and
generating, by the processor, an updated design for the 3DIC including the first chip, the second chip, the first chip metal stack configuration, the second chip metal stack configuration, the bonding pitch, and the routing.

13. The method of claim 12, further comprising:
performing, by the processor, an analysis of any of power, performance, and area using or given the updated design for the 3DIC;
determining, by the processor, whether the updated design for the 3DIC meets at least one power, performance, or area specification based on results of the analysis; and
when the updated design for the 3DIC fails to meet the at least one power, performance, or area specification, proceeding by one of:
when accessing the preliminary design, iteratively repeating, by the processor, the determining of the first chip metal stack configuration, the second chip metal stack configuration, the bonding pitch, and the routing; and
when receiving the two selections, iteratively repeating the receiving of the two selections and the determining of the routing.

14. The method of claim 12, or 13 wherein the bonding pitch any of:
matches the first chip last metal level pitch and the second chip last metal level pitch;
matches one of the first chip last metal level pitch and the second chip last metal level pitch; and
is larger than any of the first chip last metal level pitch and the second chip last metal level pitch.

15. The method of one of claims 12 to 14, wherein the first chip last metal level pitch and the second chip last metal level pitch are any of the same and different, and wherein the first chip metal stack configuration and the second chip metal stack configuration are any of the same and different.
